# EUROPÄISCHE PATENTSCHRIFT

(11) **EP 2 028 070 B1**
(45) Veröffentlichungstag und Bekanntmachung des Hinweises auf die Patenterteilung: **12.09.2018**
(21) Anmeldenummer: 08012101.5
(22) Anmeldetag: 04.07.2008
(51) Int. Cl.: B60T 13/38, B60T 13/66, B61H 13/00

(54) **Bremseinrichtung eines Schienenfahrzeugs mit separatem Betätigungsorgan zur Betätigung der aktiven Druckluftbremse als Festhaltbremse**
Braking device of a rail vehicle with separate actuation device for actuating the active pressurised air brake as parking brake
Dispositif de frein d'un véhicule sur rail doté d'un organe d'actionnement séparé destiné à actionner le frein à air comprimé actif en tant que frein à levier

(30) Priorität: 05.07.2007 DE 102007031235
(43) Veröffentlichungstag der Anmeldung: 25.02.2009
(73) Patentinhaber: KNORR-BREMSE Systeme für Schienenfahrzeuge GmbH, 80809 München (DE); Deutsche Bahn AG, 10785 Berlin (DE)
(72) Erfinder: Berger, Peter, 85716 Unterschleissheim (DE); Minde, Frank, 31688 Nienstädt (DE)
(74) Vertreter: Mattusch, Gundula

(56) Entgegenhaltungen:
- DE-A1- 10 324 438
- US-B1- 6 312 060

## Beschreibung

### Stand der Technik

Die Erfindung geht aus von einer Bremseinrichtung eines Schienenfahrzeugs mit einer aktiven, durch ein Betätigungsorgan betätigbaren Druckluftbremse als Betriebsbremse beinhaltend wenigstens einen pneumatisch betätigten Aktuator, der belüftet die Druckluftbremse zuspannt und sie entlüftet löst, sowie mit einer passiven Federspeicherbremse als Feststellbremse beinhaltend wenigstens einen gegen die Wirkung einer Speicherfeder pneumatisch betätigten Federspeicherbremszylinder, der entlüftet die Federspeicherbremse zuspannt und sie belüftet löst, wobei der Federspeicherbremszylinder mit einem Druckluftvorrat ständig in druckluftleitender Verbindung steht, gemäß dem Oberbegriff von Anspruch 1.

Eine solche Bremseinrichtung ist aus dem Stand der Technik bekannt. Zur Ansteuerung von Feststellbremsen in Schienenfahrzeugen sind grundsätzlich zwei Systeme in bekannt:
Beim ersten System wird das Be- oder Entlüften der Federspeicherbremse durch Betätigung eines Betätigungsorgans durch den Triebfahrzeugführer bewirkt. Die Feststellbremse kann folglich durch den Triebfahrzeugführer unabhängig vom Zustand der Druckluftbremse zugespannt oder gelöst werden, z.B. bei der Durchführung von Bremsproben im Stand. Die Steuerung ist so ausgelegt, dass sich relativ kurze Anlege- und Lösezeiten realisieren lassen.

Nachteil dieser Lösung ist, dass die Feststellbremse während der Fahrt aufwändig überwacht werden muss, da beispielsweise ein Schlauchbruch zwangsweise zu einem ungewollten Zuspannen der Federspeicherbremse führt. Dadurch ergeben sich an Scheiben und Belägen von Scheibenbremsen oder im Falle von Klotzbremsen an den Klötzen und Rädern hohe thermische Belastungen. Außerdem bringt die zwangsweise und ungewollte Einbremsung insbesondere im Falle eines Stillstands in langen Tunneln Sicherheitsnachteile.

Beim zweiten bekannten System erfolgt die Ansteuerung der Federspeicherbremse automatisch in Abhängigkeit vom gerade vorliegenden Vorratsdruck im Bremsluftvorratsbehälter des Schienenfahrzeugs. Vom Fahrzustand in den Stillstand wird das Fahrzeug nur mit der Druckluftbremse gebremst und dort von dieser zunächst gehalten. Dabei wird die Druckluftbremse als Feststellbremse mit demselben Betätigungsorgan betätigt, mit dem auch die Druckluftbremse als Betriebsbremse betätigt wird. Erst wenn sich bei abgestelltem oder abgerüsteten Fahrzeug der Vorratsdruck im Bremsluftvorratsbehälter aufgrund von unvermeidbaren Undichtigkeiten im Druckluftsystem verringert hat, wird die Bremskraft der Federspeicherbremse in dem Maße wirksam wie die Bremskraft der Druckluftbremse abnimmt. Bei solchen Systemen sind die Federspeicherbremsen in der Regel mit einer zusätzlichen Notlöseeinrichtung ausgerüstet, die bei einem Schlauchbruch, d.h. bei plötzlichem Druckverlust in der Vorsorgungsleitung die Federspeicherzylinder automatisch in der Lösestellung belassen. Damit ist zwar eine thermische Überlastung der Bremseinrichtung ausgeschlossen und eine Weiterfahrt problemlos möglich. Nachteil dieser Lösung ist jedoch, dass ein Zuspannen der Federspeicherbremszylinder nur bei langsamem Absinken des Vorratsdrucks bedingt beispielsweise durch Undichtigkeiten des Druckluftsystems der Druckluftbremse erfolgen kann. Jedoch kann die Federspeicherbremse weder unabhängig von der Druckluftbremse noch mit kurzen Zuspann- und Lösezeiten vom Triebfahrzugführer gesteuert werden. Dies bringt nicht zuletzt den Nachteil mit sich, dass im Rahmen einer Bremsprobe bei Stillstand des Zuges mit dem Lösen der Druckluftbremse als Betriebsbremse gleichzeitig auch die Federspeicherbremse als Feststellbremse gelöst wird.

Dokument US 6 312 060 B1 offenbart eine Bremseinrichtung eines Schienenfahrzeugs mit einer aktiven, durch ein Betätigungsorgan betätigbaren Druckluftbremse als Betriebsbremse beinhaltend wenigstens einen pneumatisch betätigten Aktuator, der belüftet die Druckluftbremse zuspannt und sie entlüftet löst, sowie mit einer passiven Federspeicherbremse als Feststellbremse beinhaltend wenigstens einen gegen die Wirkung einer Speicherfeder pneumatisch betätigten Federspeicherbremszylinder, der entlüftet die Federspeicherbremse zuspannt und sie belüftet löst.

Der vorliegenden Erfindung liegt die Aufgabe zugrunde, eine Bremseinrichtung der oben erwähnten Art derart weiter zu entwickeln, dass die erwähnten Nachteile vermieden werden.

Diese Aufgabe wird erfindungsgemäß durch die Merkmale von Anspruch 1 gelöst.

### Vorteile der Erfindung

Die Erfindung basiert auf dem Gedanken, dass eine mit dem Druckluftvorrat oder mit einem weiteren Druckluftvorrat in druckluftleitender Verbindung stehende, durch ein weiteres, separates Betätigungsorgan steuerbare Ventileinrichtung vorgesehen ist, welche bei Einsteuern eines durch das weitere Betätigungsorgan erzeugtes Anforderungssignal zum Zuspannen der Feststellbremse den pneumatischen Aktuator der Druckluftbremse belüftet und diesen bei Einsteuern eines durch das weitere Betätigungsorgan, erzeugtes Anforderungssignal zum Lösen der Feststellbremse entlüftet.

Durch Vorsehen eines vom Betätigungsorgan der Betriebsbremse getrennten Betätigungsorgans, das vorzugsweise manuell betätigt wird kann nun die Druckluftbremse nicht nur als Betriebsbremse sondern auch als Feststellbremse separat und willkürlich bedient werden. Dies bringt bei Bremsproben den Vorteil mit sich, dass nach einem Lösen der Betriebsbremse der Zug durch Zuspannen der Druckluftbremse mittels des weiteren Betätigungsorgans und der Ventileinrichtung gegen Abrollen gesichert ist.

Die Druckluftbremse wirkt als zeitlich begrenzt wirksame, jederzeit lösbare Festhaltebremse in Kombination mit einer druckluftbetätigten Federspeicherbremse als Abstellbremse. Dabei erfolgt weiterhin ein automatischer Übergang von der Druckluftbremse als Festhaltebremse auf die Federspeicherbremse als Abstellbremse bei abgestelltem oder abgerüstetem Schienenfahrzeug. Beim Sichern des Schienenfahrzeugs beispielsweise im Rahmen des Abrüstens wird zunächst die Druckluftbremse als Festhaltebremse zugespannt. Solange der Vorratsdruck im Bremsluftvorratsbehälter weiterhin groß genug ist, erzeugt die Druckluftbremse eine für das Halten des Schienenfahrzeugs ausreichende Bremskraft. Sinkt jedoch aufgrund von unvermeidbaren Undichtigkeiten der Vorratsdruck im Bremsluftvorratsbehälter langsam ab, so lässt diese Bremskraft nach. Gleichzeitig sinkt auch der Druck in den Druckkammern der sich bisher in Lösestellung befindlichen Federspeicherbremszylinder, so dass diese nun die Brems- oder Haltekraft aufbauen. Somit wird die abnehmende Wirkung der Druckluftbremse als Festhaltebremse durch die zunehmende Bremskraft der Federspeicherbremse als Abstellbremse kompensiert.

Durch die in den Unteransprüchen aufgeführten Maßnahmen sind vorteilhafte Weiterbildungen und Verbesserungen der im Patentanspruch 1 angegebenen Erfindung möglich.

Wenn zusätzlich eine automatische Notlöseeinrichtung vorgesehen wird, führt ein Schlauchbruch in der Versorgungsleitung der Federspeicher gegenüber dem eingangs beschriebenen ersten System nicht mehr zu einem automatischen Zuspannen der Federspeicherbremse. Vielmehr wird der Lösezustand der Federspeicherbremse automatisch beibehalten. Damit wird eine thermische Überlastung der Bremseinrichtung verhindert.

Genaueres geht aus der folgenden Beschreibung eines Ausführungsbeispiels hervor.

### Zeichnung

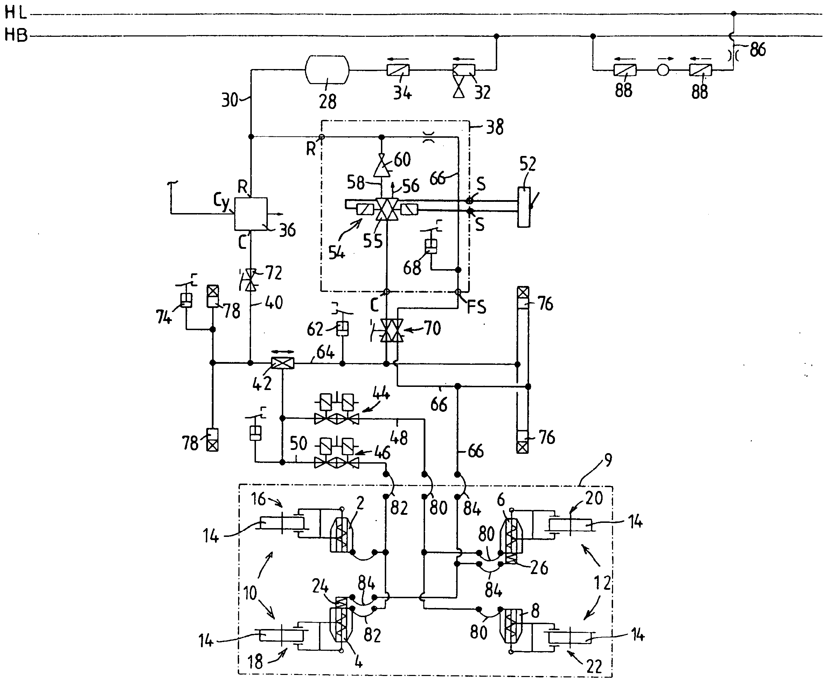

Nachstehend ist ein Ausführungsbeispiel der Erfindung in der Zeichnung dargestellt und in der nachfolgenden Beschreibung näher erläutert. In der Zeichnung zeigt die einzige Figur einen schematischen Schaltplan einer gemäß einer bevorzugten Ausführungsform der Erfindung.

### Beschreibung des Ausführungsbeispiels

Die in der Figur als Schaltplan schematisch gezeigte Bremseinrichtung 1 eines Schienenfahrzeugs umfasst einerseits eine aktive Druckluftbremse als Betriebsbremse sowie eine passive Federspeicherbremse als Feststellbremse.

Unter einer Betriebsbremse soll im Gegensatz zu einer Feststellbremse eine Bremse verstanden werden, welche das Schienenfahrzeug aus dem fahrenden Zustand abbremst, während die Feststellbremse das durch die Betriebsbremse bereits abgebremste Schienenfahrzeug eingebremst hält.

Unter einer aktiven Bremse wird gemeinhin eine Bremse verstanden, welche durch Belüften zugespannt und durch Entlüften gelöst wird. Entsprechend handelt es sich bei einer passiven Bremse um eine Bremse, welche durch Belüften gelöst und durch Entlüften zugespannt wird.

Demzufolge beinhaltet die Druckluftbremse der Bremseinrichtung 2 wenigstens einen pneumatisch betätigten aktiven Aktuator 2, 4, 6, 8. Ein solcher Aktuator 2, 4, 6, 8 wird üblicherweise durch einen Bremszylinder gebildet, der einen eine Druckkammer begrenzenden, gegen die Wirkung einer Rückholfeder arbeitenden Kolben linear führt, dessen Kolbenstange einen Bremsmechanismus betätigt. Dabei spannt die Druckluftbremse im belüfteten Zustand der Druckkammer zu, während sie im entlüfteten Zustand der Druckkammer gelöst ist. Im Ausführungsbeispiel der Figur ist beispielhaft für jedes Rad eines Drehgestells 9 aus zwei Achsen 10, 12 und vier Rädern 14 ein pneumatischer Bremszylinder 2, 4, 6, 8 als Teil einer Bremszangeneinheit 16, 18, 20, 22 vorhanden.

Demgegenüber beinhaltet die Federspeicherbremse vorzugsweise lediglich zwei Federspeicherbremszylinder 24, 26 , welche beispielsweise sich schräg gegenüberliegenden Bremszangeneinheiten 18, 20 von Rädern 14 verschiedener Achsen 10, 12 zugeordnet sind. Ein solcher Federspeicherbremszylinder 24, 26 führt in bekannter Weise einen gegen die Wirkung einer Speicherfeder pneumatisch betätigbaren Federspeicherbremskolben, welcher eine Druckkammer begrenzt, wobei die Federspeicherbremse im belüfteten Zustand der Druckkammer gelöst und im entlüfteten Zustand zugespannt ist. Die Funktion solcher Federspeicherbremszylinder 24, 26 sowie solcher pneumatischer Aktuatoren 2, 4, 6, 8 ist hinlänglich bekannt, weshalb sie hier nicht weiter erläutert werden soll.

Die Druckluftbremse ist bevorzugt eine elektro-pneumatische Druckluftbremse, d.h., dass eine elektrische Steuerung der Druckluftbremse vorhanden ist, um die bei einer pneumatischen Steuerung zwangsläufig auftretende Durchschlagszeit der Druckwelle auszuschalten und damit im ganzen Zug gleichzeitig einsetzende Bremswirkung zu erzielen.

Bei der hier bevorzugt verwendeten indirekten elektro-pneumatischen Druckluftbremse wird der Druck in einer Hauptluftleitung bzw. Bremsleitung HL durch nicht gezeigte Magnetventile verändert, die Brems- und Lösevorgänge werden dann über pneumatisch gesteuerte Steuerventile 36 gesteuert. Um zum Lösen den Druck in der Hauptluftleitung HL erhöhen zu können, ist eine zweite Luftleitung (Füllleitung) erforderlich, die Hauptluftbehälterleitung HB. Bei einer direkten elektro-pneumatischen Druckluftbremse, bei welcher die Erfindung ebenfalls verwendet werden könnte, werden die Bremszylinder hingegen über elektrisch betätigte Brems- und Löseventile direkt be- und entlüftet.

Wie bereits oben erläutert sind zwei Bremszangeneinheiten 18, 20 mit einem Federspeicherbremszylinder 24, 26 ausgerüstet. Bei druckloser Druckkammer wird die Kraft der Speicherfeder auf die Bremsbeläge übertragen und somit eine Bremskraft aufgebaut. Zum Lösen der Federspeicherbremse wird die Druckkammer der Federspeicherbremszylinder 24, 26 mit Druckluft beaufschlagt.

Das Schienenfahrzeug sei Bestandteil eines Schienenfahrzeugzuges, so dass die die Brems- und Lösevorgänge steuernde Hauptluftleitung HL sowie die Hauptluftbehälterleitung HB durch den gesamten Zug gezogen ist. Die Hauptluftleitung HL oder Bremsleitung wird üblicherweise mit einem Druck von maximal 5 bar (5·10⁵ Pa) zum Bremslösen und zum Zuspannen mit einem niedrigeren Druck beaufschlagt. Die Hauptluftbehälterleitung HB dient demgegenüber der Druckluftversorgung der Bremse und führt in der Regel Druckluft mit einem Druck von 10 bar (10·10⁵ Pa).

Zum Aufrüsten des Schienenfahrzeugs wird die Bremse folglich aus der Hauptluftbehälterleitung HB mit Druckluft gefüllt. Die Druckluft gelangt durch eine Druckluftleitung 30 über einen Luftfilter 32 und ein Rückschlagventil 34 in den Bremsluftvorratsbehälter 28. Damit steht Druckluft unter Vorratsdruck auch an einem Anschluss R einer Betriebsbremssteuereinheit 36 für die Betriebsbremse und an einem Anschluss R einer in der Figur symbolisch durch eine Strich-Punkt-Linie umrandete Feststellbremssteuereinheit 38 für die Feststellbremse an.

Bei der Betriebsbremssteuereinheit 36 handelt es sich bevorzugt um ein Relaisventil, dessen Steueranschluss Cy mit einem Vorsteuerdruck beaufschlagbar ist, in Abhängigkeit dessen aus dem Vorratsdruck ein Bremsdruck an einem Arbeitsanschluss C moduliert wird. Dieser Arbeitsanschluss C steht über eine Druckluftleitung 40 mit einem Doppelrückschlagventil 42 in Verbindung, welches über Gleitschutzventile 44, 46 beinhaltende Druckluftleitungen 48, 50 die Bremszylinder 2, 4, 6, 8 der vier Bremszangeneinheiten 16, 18, 20, 22 des Drehgestells 9 mit Druckluft unter Bremsdruck versorgt. Der Steuerdruck für den Steueranschluss Cy der Betriebsbremssteuereinheit 36 wird in Abhängigkeit des Drucks in der Hauptluftleitung HL herrschenden Drucks erzeugt, welcher wiederum in Abhängigkeit eines Betriebsbremsanforderungssignals erzeugt wird, welches ein vom Zugführer betätigte Betriebsbremsbetätigungsorgan aussteuert, um eine Betriebsbremsung auszulösen.

Die Feststellbremssteuereinheit 38 zum Steuern der Feststellbremse beinhaltet eine über den Anschluss R mit dem Bremsluftvorratsbehälter 28 oder mit einem weiteren Druckluftvorrat in druckluftleitender Verbindung stehende, durch ein vom Betriebsbremsbetätigungsorgan verschiedenes und separates Feststellbremsbetätigungsorgan 52 steuerbare Ventileinrichtung 54, welche bei Einsteuern eines durch das Feststellbremsbetätigungsorgan 52 erzeugtes Anforderungssignal zum Zuspannen der Feststellbremse die Bremszylinder 2, 4, 6, 8 der Druckluftbremse belüftet und diese bei Einsteuern eines durch das Feststellbremsbetätigungsorgan 52 erzeugtes Anforderungssignal zum Lösen der Feststellbremse entlüftet. Dabei kann die Ventileinrichtung 54 durch ein manuell erzeugtes, durch ein elektrisches, durch ein pneumatisches oder durch ein hydraulisches Anforderungssignal steuerbar sein. Das Feststellbremsbetätigungsorgan 52 zur Erzeugung des Ansteuersignals besteht vorzugsweise in einem elektrischen Schalter oder Hebel mit den Stellungen "Feststellbremse zuspannen" und "Feststellbremse lösen".

Die Ventileinrichtung 54 umfasst bevorzugt ein durch das elektrische Anforderungssignal steuerbares 3/2-Wege-Magnetventil 55, welches abhängig von dem elektrischen Anforderungssignal den über den Anschluss R angeschlossenen Bremsluftvorratsbehälter 28 mit den Bremszylindern 2, 4, 6, 8 der Druckluftbremse verbindet oder diese mit einer Entlüftung 56. Das 3/2-Wege-Magnetventil 55 ist bevorzugt impulsgesteuert, wodurch es seine durch ein kurzzeitiges elektrisches Anforderungssignal hervorgerufene Schaltstellung auch nach Abklingen des elektrischen Anforderungssignals solange beibehält, bis es durch ein eggenteiliges Anforderungssignal umgeschaltet wird. In der den Vorratsdruck R führenden Druckluftleitung 58 ist ein Druckminderventil 60 als Teil der Ventileinrichtung 54 dem 3/2-Wege-Magnetventil 55 vorgeschaltet, welches den am Anschluss C anstehenden Bremsdruck einstellt. Nicht zuletzt ist ein Drucksensor 62 zur Überwachung des Bremsdrucks in der sich zwischen dem 3/2-Wege-Magnetventil 55 und den Bremszylindern 2, 4, 6, 8 der Druckluftbremse erstreckenden Druckluftleitung 64 vorgesehen.

Die den beiden Bremszangeneinheiten 18, 20 zugeordneten Federspeicherbremszylinder 24, 26 stehen mit dem Bremsluftvorratsbehälter 28 über eine Druckleitung 66 ständig in druckluftleitender Verbindung. Dadurch sind die Druckkammern der Federspeicherbremszylinder 24, 26 belüftet und die Federspeicherbremse befindet sich zunächst in Lösestellung. In die der Federspeicherbremse zugeordnete Druckleitung 66 ist ein Drucksensor 68 eingebaut, welcher ständig den in dieser Leitung herrschenden Vorratsdruck misst. In den Druckleitungen 64 und 66 ist außerdem je ein Absperrventil angeordnet, im vorliegenden Fall ein Doppelabsperrventil 70.

Dabei sind zumindest ein Teil der der Federspeicherbremse zugeordneten Druckleitung 66, die gesamte Ventileinrichtung 54 sowie wenigstens der Drucksensor 68 in der Feststellbremssteuereinheit 38 als Baueinheit zusammengefasst, welche als Anschlüsse den mit dem Bremsluftvorratsbehälter 28 verbundenen Anschluss R, einen mit den Federspeicherbremszylindern 24, 26 verbundenen Anschluss FS sowie einen mit den Bremszylindern 2, 4, 6, 8 der Druckluftbremse verbundenen Arbeitsanschluss C aufweist. Weiterhin sind elektrische Anschlüsse S für das Feststellbremsbetätigungsorgan 52 vorhanden.

Das Doppelabsperrventil 70 dient zum Absperren der Feststellbremssteuereinheit 38 bei Störungen und Wartungsarbeiten. Ein in die Druckluftleitung 40 integriertes Absperrventil 72 dient zum Absperren der Druckluftbremse bei Störungen und Wartungsarbeiten, der dort ebenfalls integrierte Drucksensor 74 zum Messen des von der Betriebsbremssteuereinheit 36 ausgesteuerten Bremsdrucks. Die Drucksensoren 62, 68 und 74 sowie die Anzeigevorrichtungen 76 und 78 dienen folglich zur Überwachung und Diagnose der Druckluft- und Feststellbremse. Die Gleitschutzventile 44, 46 werden von einer bekannten Einrichtung angesteuert, die den Bremsdruck bei ungünstigen Kraftschlussverhältnissen zwischen Rad und Schiene beeinflussen kann.

Vor diesem Hintergrund ist die Funktionsweise der Bremseinrichtung 1 wie folgt: Zum Einbremsen des sich in Fahrt befindlichen Schienenfahrzeugs muss die Druckluftbremse als Betriebsbremse zugespannt werden. Die Steuerung der Druckluftbremse als Betriebsbremse erfolgt durch die Betriebsbremssteuereinheit 36, wobei der von ihr am Arbeitsanschluss C ausgesteuerte Bremsdruck von einem den Vorsteuerdruck erzeugenden, nicht dargestellten Regelventil abhängig ist. Der durch dieses Regelventil erzeugte Vorsteuerdruck ist wiederum abhängig vom Druck in der Hauptluftleitung HL. Ein steigender Vorsteuerdruck am Anschluss Cy sorgt für einen steigenden Bremsdruck, der dann über das geöffnete Absperrventil 72, das Doppelrückschlagventil 42, die durchgeschalteten Gleitschutzventile 44, 46 und Schlauchleitungen 80, 82 zu den Bremszylindern 2, 4, 6, 8 der Bremszangeneinheiten 16, 18, 20, 22 durchgesteuert werden, wodurch Bremskraft aufgebaut wird. Sinkt der Vorsteuerdruck am Steueranschluss Cy ab, wird auch der Bremszylinderdruck und damit die Bremskraft entsprechend abgesenkt.

Zum Halten des Schienenfahrzeugs in dem durch die Betriebsbremse in oben beschriebener Weise eingebremsten Zustand muss die Feststellbremse zugespannt werden, wozu das Feststellbremsbetätigungsorgan 52 manuell in die Schaltstellung "Feststellbremse zuspannen" gebracht wird, woraufhin es ein entsprechendes elektrisches Anforderungssignal an das 3/2-Wege-Magnetventil 55 aussteuert, welches von einer Schaltstellung, in welcher der Anschluss C mit der Entlüftung 56 verbunden ist, in eine Schaltstellung umschaltet, in welcher dieser Anschluss C mit dem Anschluss R verbunden wird, an dem Druckluft unter Vorratsdruck ansteht.

Somit gelangt Druckluft aus dem Bremsluftvorratsbehälter 28 über die Druckleitung 30, das Druckminderventil 60 und das 3/2-Wege-Magnetventil 55 zum Anschluss C der Feststellbremssteuereinheit 38. Von dort wird die Druckluftluft über das offene Doppelabsperrventil 70, das Doppelrückschlagventil 42, die auf Durchgang geschalteten Gleitschutzventile 44, 46 und die Schlauchleitungen 80, 82 zu den Bremszylindern 2, 4, 6, 8 der Bremszangeneinheiten 16, 18, 20, 22 durchgeleitet. Die nun anstatt von der Betriebsbremssteuereinheit 36 durch die Feststellbremssteuereinheit 38 angesteuerten Bremszylinder 2, 4, 6, 8 spannen die Druckluftbremse zu, so dass dort Bremskraft aufgebaut wird, welche nun das Schienenfahrzeug eingebremst hält. Die eigentlich zum Betriebsbremsen vorgesehene Druckluftbremse wirkt dann als zeitlich begrenzt wirksame Festhaltebremse.

Gleichzeitig steht die Druckluft aus dem Bremsluftvorratsbehälter 28 über die Druckluftleitung 66, den Anschluss FS der Feststellbremssteuereinheit 38, das offene Doppelabsperrventil 70 und Schlauchleitungen 84 in den Druckkammern der Federspeicherbremszylinder 24, 26 der Bremszangeneinheiten 18, 20 an, wobei mit Erreichen des Mindestlösedrucks die Federspeicherbremse gelöst ist. Jedoch ist das Schienenfahrzeug durch den am Anschluss C der Feststellbremssteuereinheit 38 anstehenden und in den Bremszylindern 2, 4, 6, 8 der Bremszangeneinheiten 16, 18, 20, 22 wirkenden Bremsdruck, durch den dort eine Bremskraft erzeugt wird, gegen Abrollen gesichert.

Das Lösen der Feststellbremse erfolgt ebenfalls durch Betätigung des Feststellbremsbetätigungsorgans 52, wodurch ein elektrisches Anforderungssignal erzeugt und in das 3/2-Wege-Magnetventil 55 eingesteuert wird, so dass dieses in die Schaltstellung umschaltet, in welcher der Anschluss C, an welchen die Bremszylinder 2, 4, 6, 8 angeschlossen sind, mit der Entlüftung 56 in Verbindung gebracht wird, so dass die am Anschluss C der Feststellbremssteuereinheit 38 anstehende Druckluft vollständig entlüftet wird und die Druckluftbremse als Festhaltebremse gelöst ist.

Beim Abrüsten des Schienenfahrzeugs, bei dem alle Systeme abgeschaltet werden, wird die Druckluftbremse als Feststellbremse wie oben beschrieben willkürlich zugespannt. Nach dem Abrüsten erfolgt jedoch keine weitere Druckluftversorgung aus der Hauptluftbehälterleitung HB. Aufgrund von unvermeidbaren Undichtigkeiten im Druckluftsystem sinkt der am Anschluss C der Feststellbremssteuereinheit 38 anstehende Bremsdruck und damit die durch die Druckluftbremse erzeugte Bremskraft langsam ab. Da der Bremsluftvorratsbehälter 28 auch an das Druckluftsystem angeschlossen ist, sinkt aber auch der Vorratsdruck in diesem und in gleichem Maße auch der am Anschluss FS der Feststellbremssteuereinheit 38 anstehende Druck ab. Wenn der Vorratsdruck nach einiger Zeit unter den Mindestlösedruck der Federspeicherbremszylinder 24, 26 gefallen ist, bauen diese in dem Maße Bremskraft auf, wie die Bremszylinder 2, 4, 6, 8 der Druckluftbremse Bremskraft abbauen. Damit wird das Schienenfahrzeug durch die Kraft der Federspeicherbremse, welche als Abstellbremse wirkt, gegen Abrollen gesichert.

Im ungestörten Betrieb ist die Federspeicherbremse (Abstellbremse) durch den am Anschluss FS der Feststellbremssteuereinheit 38 wirksamen Vorratsdruck gelöst. Tritt während des Betriebes ein Leck im Druckluftweg zwischen dem Bremsluftvorratsbehälter 28 und den Federspeicherzylindern 24, 26 auf, beispielsweise in den Schlauchleitungen 84, dann würden die Druckkammern der Federspeicherbremszylinder 24, 26 schnell entlüftet und die Federspeicherbremse somit zugespannt. Dies wäre insbesondere dann unerwünscht, wenn sich der Zug zum Zeitpunkt des Druckverlusts beispielsweise in einem Tunnel befindet. Die Federspeicherbremszylinder 24, 26 sind aus diesem Grund mit einer nicht explizit gezeigten, aber bekannten mechanischen Notlöseeinrichtung versehen, welche diese bei einem schnellen Druckluftverlust automatisch im gelösten Zustand halten.

Im Schleppfall kann die Druckluftversorgung des Schienenfahrzeugs unter Umständen nur noch aus der durchgehenden Hauptluftleitung HL erfolgen. Dann wird auch die Feststellbremse nur aus der Hauptluftleitung HL mit Druckluft versorgt. Die Druckluft gelangt dann über eine Verbindungsleitung 86 zwischen der Hauptluftleitung HL und der Hauptluftbehälterleitung HB beinhaltend Rückschlagventile 88 von der Hauptluftleitung HL in die Hauptluftbehälterleitung HB und von dort über den Luftfilter 32 und das Rückschlagventil 34 in den Bremsluftvorratsbehälter 28.

### Bezugszeichenliste

- 1: Bremseinrichtung
- 2: Aktuator
- 4: Aktuator
- 6: Aktuator
- 8: Aktuator
- 9: Drehgestell
- 10: Achse
- 12: Achse
- 14: Räder
- 16: Bremszangeneinheit
- 18: Bremszangeneinheit
- 20: Bremszangeneinheit
- 22: Bremszangeneinheit
- 24: Federspeicherbremszylinder
- 26: Federspeicherbremszylinder
- 28: Bremsluftvorratsbehälter
- 30: Druckluftleitung
- 32: Luftfilter
- 34: Rückschlagventil
- 36: Betriebsbremssteuereinheit
- 38: Feststellbremssteuereinheit
- 40: Druckluftleitung
- 42: Doppelrückschlagventil
- 44: Gleitschutzventil
- 46: Gleitschutzventil
- 48: Druckluftleitung
- 50: Druckluftleitung
- 52: Feststellbremsbetätigungsorgan
- 54: Ventileinrichtung
- 55: 3/2-Wege-Magnetventil
- 56: Entlüftung
- 58: Druckluftleitung
- 60: Druckminderventil
- 62: Drucksensor
- 64: Druckluftleitung
- 66: Druckleitung
- 68: Drucksensor
- 70: Doppelabsperrventil
- 72: Absperrventil
- 74: Drucksensor
- 76: Anzeigevorrichtung
- 78: Anzeigevorrichtung
- 80: Schlauchleitungen
- 82: Schlauchleitungen
- 84: Schlauchleitungen
- 86: Verbindungsleitung
- 88: Rückschlagventile

## Patentansprüche

1. Bremseinrichtung (1) eines Schienenfahrzeugs mit einer aktiven, durch ein Betätigungsorgan betätigbaren Druckluftbremse als Betriebsbremse beinhaltend wenigstens einen pneumatisch betätigten Aktuator (2, 4, 6, 8), der belüftet die Druckluftbremse zuspannt und sie entlüftet löst, sowie mit einer passiven Federspeicherbremse als Feststellbremse beinhaltend wenigstens einen gegen die Wirkung einer Speicherfeder pneumatisch betätigten Federspeicherbremszylinder (24, 26), der entlüftet die Federspeicherbremse zuspannt und sie belüftet löst, wobei der Federspeicherbremszylinder (24, 26) mit einem Druckluftvorrat (28) ständig in druckluftleitender Verbindung steht, **dadurch gekennzeichnet, dass** eine mit dem Druckluftvorrat (28) oder mit einem weiteren Druckluftvorrat in druckluftleitender Verbindung stehende, durch ein weiteres, separates Betätigungsorgan (52) steuerbare Ventileinrichtung (54, 55, 60) vorgesehen ist, welche bei Einsteuern eines durch das weitere Betätigungsorgan (52) erzeugtes Anforderungssignal zum Zuspannen der Feststellbremse den pneumatischen Aktuator (2, 4, 6, 8) der Druckluftbremse belüftet und diesen bei Einsteuern eines durch das weitere Betätigungsorgan (52) erzeugtes Anforderungssignal zum Lösen der Feststellbremse entlüftet.

2. Bremseinrichtung nach Anspruch 1, **dadurch gekennzeichnet, dass** die Ventileinrichtung (54, 55, 60) durch ein manuell erzeugtes, durch ein elektrisches, durch ein pneumatisches oder durch ein hydraulisches Anforderungssignal steuerbar ist.

3. Bremseinrichtung nach Anspruch 1 oder 2, **dadurch gekennzeichnet, dass** die Ventileinrichtung (54) wenigstens ein durch ein elektrisches Anforderungssignal des weiteren Betätigungsorgans steuerbares 3/2-Wege-Magnetventil (55) beinhaltet, welches abhängig von dem elektrischen Anforderungssignal den Druckluftvorrat (28) mit dem wenigstens einen pneumatischen Aktuator (2, 4, 6, 8) verbindet oder diesen mit einer Entlüftung (56).

4. Bremseinrichtung nach Anspruch 3, **dadurch gekennzeichnet, dass** das 3/2-Wege-Magnetventil (55) impulsgesteuert ist und seine durch ein kurzzeitiges elektrisches Anforderungssignal hervorgerufene Schaltstellung auch nach Abklingen des elektrischen Anforderungssignals beibehält.

5. Bremseinrichtung nach Anspruch 3 oder 4, **dadurch gekennzeichnet, dass** dem 3/2-Wege-Magnetventil (55) ein Druckminderventil (60) vorgeschaltet ist, welches den Bremsdruck des wenigstens einen pneumatischen Aktuators (2, 4, 6, 8) einstellt.

6. Bremseinrichtung nach wenigstens einem der vorhergehenden Ansprüche, **dadurch gekennzeichnet, dass** die Druckluftbremse eine direkte elektro-pneumatische Druckluftbremse ist.

7. Bremseinrichtung nach wenigstens einem der vorhergehenden Ansprüche, **dadurch gekennzeichnet, dass** ein Drucksensor (62) zur Überwachung des Bremsdrucks in einer sich zwischen der Ventileinrichtung (55) und dem pneumatischen Aktuator (2, 4, 6, 8) der Druckluftbremse erstreckenden Druckluftleitung (64) vorgesehen ist.

8. Bremseinrichtung nach wenigstens einem der vorhergehenden Ansprüche, **dadurch gekennzeichnet, dass** zumindest ein Teil einer den Federspeicherbremszylinder (24, 26) mit dem Druckluftvorrat (28) verbindenden weiteren Druckluftleitung (66) sowie die Ventileinrichtung (54) in einer Baueinheit (38) zusammengefasst sind, welche als Anschlüsse wenigstens einen mit dem Druckluftvorrat (28) verbindbaren Anschluss (R), einen mit dem Federspeicherbremszylinder (24, 26) verbindbaren Anschluss (FS) sowie einen mit dem pneumatischen Aktuator (2, 4, 6, 8) verbindbaren Anschluss (C) aufweist.

9. Bremseinrichtung nach Anspruch 7 und 8, **dadurch gekennzeichnet, dass** in der einen Druckluftleitung (64, 66) und in der weiteren Druckluftleitung ein Absperrventil (70) angeordnet ist.

## Claims

1. Braking device (1) of a rail vehicle, with an active compressed air brake acting as service brake, which is actuable by an actuating element and includes at least one pneumatically actuated actuator (2, 4, 6, 8), which applies the compressed air brake if ventilated and releases it if vented, and with a passive spring brake acting as parking brake, which includes at least one spring brake cylinder (24, 26), which is pneumatically actuated against the action of an accumulator spring and applies the spring brake if vented and releases it if ventilated, wherein the spring brake cylinder (24, 26) is permanently connected in a compressed air conducting manner to a compressed air reservoir (28), **characterised in that** a valve device (54, 55, 60), which is connected in a compressed air conducting manner to the compressed air reservoir (28) or to another compressed air reservoir and controllable by a further, separate actuating element (52) and which, on the input of a request signal generated by the further actuating element (52) for applying the parking brake, ventilates the pneumatic actuator (2, 4, 6, 8) of the compressed air brake and, on the input of a request signal generated by the further actuating element (52) for releasing the parking brake, vents the pneumatic actuator (2, 4, 6, 8).

2. Braking device according to claim 1, **characterised in that** the valve device (54, 55, 60) is controllable by a manually generated, an electric, a pneumatic or a hydraulic request signal.

3. Braking device according to claim 1 or 2, **characterised in that** the valve device (54) includes at least one 3/2-way solenoid valve (55), which is controllable by an electric request signal of the further actuating element and which, as a function of the electric request signal, connects the compressed air reservoir (28) to the at least one pneumatic actuator (2, 4, 6, 8) or the latter to a vent (50).

4. Braking device according to claim 3, **characterised in that** the 3/2-way solenoid valve (55) is pulse-controlled and maintains its switching position caused by a short-time electric request signal even after the decay of the electric request signal.

5. Braking device according to claim 3 or 4, **characterised in that** a pressure reducing valve (60), which adjusts the braking pressure of the at least one pneumatic actuator (2, 4, 6, 8), is located upstream of the 3/2-way solenoid valve (55).

6. Braking device according to one or more of the preceding claims, **characterised in that** the compressed air brake is a direct electropneumatic compressed air brake.

7. Braking device according to one or more of the preceding claims, **characterised in that** a pressure sensor (62) is provided for monitoring the brake pressure in a compressed air line (64) extending between the valve device (55) and the pneumatic actuator (2, 4, 6, 8) of the compressed air brake.

8. Braking device according to one or more of the preceding claims, **characterised in that** at least a part of a further compressed air line (66) connecting the spring brake cylinder (24, 26) to the compressed air reservoir (28) and the valve device (54) are combined to form an assembly (38), which comprises as connections at least one connection (R) connectable to the compressed air reservoir (28), a connection (FS) connectable to the spring brake cylinder (24, 26) and a connection (C) connectable to the pneumatic actuator (2, 4, 6, 8).

9. Braking device according to claims 7 and 8, **characterised in that** a shutoff valve (70) is located in the one compressed air line (64, 66) and in the further compressed air line.

## Revendications

1. Dispositif (1) de frein d'un véhicule ferroviaire, ayant un frein à air comprimé actif et pouvant être actionné par un organe d'actionnement, comme frein de service, comportant au moins un actionneur (2, 4, 6, 8) à actionnement pneumatique, qui, alimenté en air, serre le frein à air comprimé et, mis à l'atmosphère, le desserre, ainsi qu'un frein passif à ressort accumulateur, comme frein de stationnement, comportant au moins un cylindre (24, 26) de frein à ressort accumulateur à actionnement pneumatique à l'encontre de l'action d'un ressort accumulateur, qui, mis à l'atmosphère, serre le frein à ressort accumulateur, et qui, alimenté en air, le desserre, dans lequel le cylindre (24, 26) de frein à ressort accumulateur est en liaison constamment, de manière à conduire de l'air comprimé, avec un réservoir (28) d'air comprimé, **caractérisé en ce qu'**il est prévu un dispositif (54, 55, 60) de soupape en liaison, de manière à conduire de l'air comprimé, avec le réservoir (28) d'air comprimé ou avec un autre réservoir d'air comprimé et pouvant être commandé par un autre organe (52) distinct d'actionnement, lequel dispositif, à l'entrée d'un signal de prescription produit par l'autre organe (52) d'actionnement de serrage du frein de stationnement, alimente en air l'actionneur (2, 4, 6, 8) pneumatique du frein à air comprimé et le met à l'atmosphère pour desserrer le frein de stationnement à l'entrée d'un signal de prescription produit par l'autre organe (52) d'actionnement.

2. Dispositif de frein suivant la revendication 1, **caractérisé en ce que** le dispositif (54, 55, 60) de soupape peut être commandé par un signal de prescription produit manuellement, par un signal de prescription électrique, par un signal de prescription pneumatique ou par un signal de prescription hydraulique.

3. Dispositif de frein suivant la revendication 1 ou 2, **caractérisé en ce que** le dispositif (54) de soupape comporte au moins une électrovanne (55) à 3/2 voies, qui peut être commandée par un signal de prescription électrique de l'autre organe d'actionnement et qui, en fonction du signal de prescription électrique, met le réservoir (28) d'air comprimé en communication avec le au moins un actionneur (2, 4, 6, 8) pneumatique ou met celui-ci en communication avec une mise à l'atmosphère (56).

4. Dispositif de frein suivant la revendication 3, **caractérisé en ce que** l'électrovanne (55) à 3/2 voies est commandée par impulsion et sa position de commutation, provoquée par un signal de prescription électrique de courte durée, se conserve même après évanouissement du signal de prescription électrique.

5. Dispositif de frein suivant la revendication 3 ou 4, **caractérisé en ce qu'**en amont de l'électrovanne (55) à 3/2 voies, est monté un détendeur (60), qui règle la pression de frein du au moins un actionneur (2, 4, 6, 8) pneumatique.

6. Dispositif de frein suivant au moins l'une des revendications précédentes, **caractérisé en ce que** le frein à air comprimé est un frein à air comprimé direct électropneumatique.

7. Dispositif de frein suivant au moins l'une des revendications précédentes, **caractérisé en ce qu'**il est prévu un capteur (62) de pression pour contrôler la pression de frein dans un conduit (64) pour de l'air comprimé, s'étendant entre le dispositif (55) de soupape et l'actionneur (2, 4, 6, 8) pneumatique du frein à air comprimé.

8. Dispositif de frein suivant au moins l'une des revendications précédentes, **caractérisé en ce qu'**au moins une partie d'un autre conduit (66) pour de l'air comprimé, mettant en communication le cylindre (24, 26) de frein à ressort accumulateur et le réservoir (28) d'air comprimé, ainsi que le dispositif (54) de soupape, sont rassemblés en une unité (38) de construction, qui a, comme raccord, au moins un raccord (R) pouvant être relié au réservoir (28) d'air comprimé, un raccord (FS) pouvant être relié au cylindre (24, 26) de frein à ressort accumulateur, ainsi qu'un raccord (C) pouvant être relié à l'actionneur (2, 4, 6, 8) pneumatique.

9. Dispositif de frein suivant la revendication 7 et 8, **caractérisé en ce qu'**un robinet (70) d'arrêt est monté dans le un conduit (64, 66) pour de l'air comprimé ou dans l'autre conduit pour de l'air comprimé.
